# EUROPEAN PATENT APPLICATION

(11) **EP 2 434 747 A1**
(43) Date of publication of application: **28.03.2012**
(21) Application number: 11182097.3
(22) Date of filing: 21.09.2011
(51) Int. Cl.: H04N 5/225, G02B 7/00

(54) **Camera device**

(30) Priority: 22.09.2010 JP 2010212225; 18.05.2011 JP 2011111473
(71) Applicant: Panasonic Corporation, Kadoma-shi Osaka 571-8501 (JP)
(72) Inventor: Wada, Jyouji, Osaka, 540-6207 (JP); Ootsuna, Yoshinori, Osaka, 540-6207 (JP); Kajino, Tetsuro, Osaka, 540-6207 (JP)
(74) Representative: Eisenführ, Speiser & Partner

(57) **Abstract**

A camera device in which a mechanism for retracting an image pickup element to switch optical filters is not required to thereby enable a reduction in cost and weight is provided. A camera device (1) includes: an image pickup element (4); a birefringent plate (5) fixed to a front surface of the image pickup element (4); and an optical glass member (8) arranged on an optical path of the image pickup element (4) on a front side of the birefringent plate (5). The optical glass member (8) has a plurality of optical characteristic areas (11) and (12) with different optical characteristics from each other. The optical characteristic areas (11) and (12) are switched such that one of the plurality of optical characteristic areas (11) and (12) is arranged on the optical path by moving the optical glass member (8) in a direction intersecting with the optical path. The plurality of optical characteristic areas include an infrared cut filter area (11) and a blank glass area (12). The infrared cut filter area (11) is formed by depositing an infrared cut material with infrared cut characteristics on a surface of the optical glass member (8) .

## Description

### BACKGROUND OF THE INVENTION

### Field of the Invention

The present invention relates to a camera device having an optical filter switching function.

### Description of the Related Art

Camera devices are used as surveillance cameras for monitoring a surveillance area, for example. A surveillance camera having a function to switch optical filters (an infrared cut filter) to perform monitoring night and day has been proposed (for example, see Japanese Patent Laid-Open Nos. 2001-75140 and 2006-148299) .

The conventional surveillance camera captures images with an infrared cut filter being arranged at the front surface of an image pickup element in the daytime, and with an optical glass (a blank glass) being arranged at the front surface of the image pickup element in the nighttime.

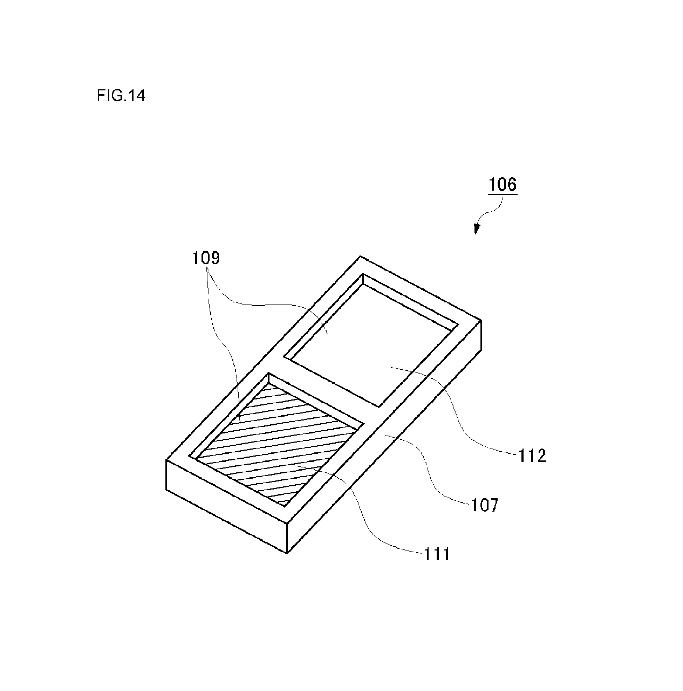

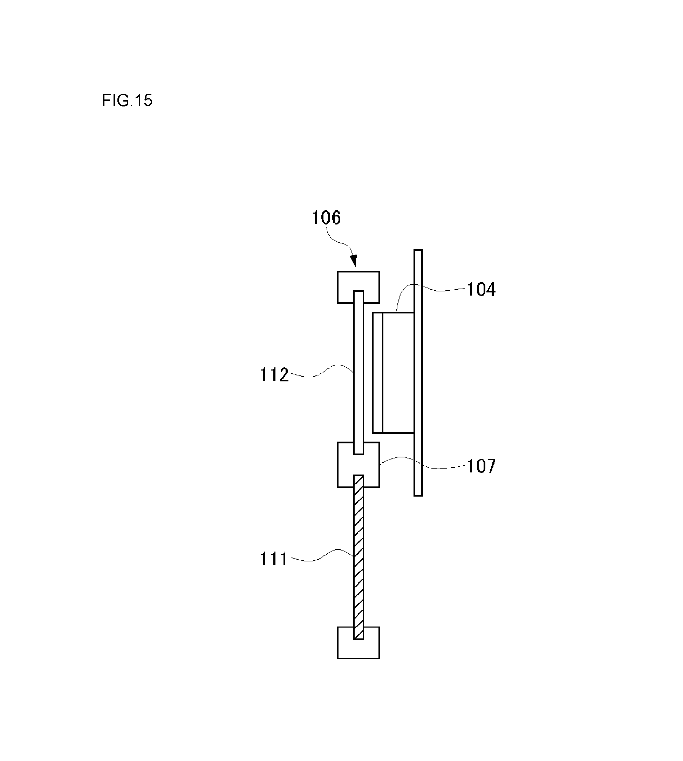

However, as shown in FIG. 14, in an optical filter member 106 used in the conventional surveillance camera, two window portions 109 are provided in a filter frame 107 of the optical filter member 106. An infrared cut filter member 111 is fitted to one of the window portions, and an optical glass member 112 is fitted to the other window portion. The infrared cut filter member 111 and the optical glass member 112 are sectioned by the filter frame 107. Thus, the filter frame 107 exists as a step between the infrared cut filter member 111 and the optical glass member 112. In a case in which the optical filter member 106 is arranged close to an image pickup element 104 as shown in FIG. 15, the image pickup element 104 and the optical filter member 106 need to be moved away from each other by retracting the image pickup element 104 (or the optical filter member 106) such that the image pickup element 104 does not come into contact with the step of the filter frame 107 when the infrared cut filter member 111 is switched to the optical glass member 112. A mechanism therefor (a mechanism for retracting the image pickup element 104) is thus required. Separately providing such a mechanism causes an increase in manufacturing cost and total weight of a product (the camera device). In a case in which the mechanism for retracting the image pickup element 104 is not provided, the image pickup element 104 and the optical filter member 106 need to be arranged at a distance. Thus, there occurs a problem that dust attached to the optical filter member 106 appears in an image.

The present invention has been made to solve the aforementioned conventional problems, and it is an object of the present invention to provide a camera device capable of switching optical filters without retracting an image pickup element, and thereby enabling a reduction in cost and weight.

### SUMMARY OF THE INVENTION

A camera device according to the present invention includes: an image pickup element; a birefringent plate fixed to a front surface of the image pickup element; an optical glass member arranged on an optical path of the image pickup element on a front side of the birefringent plate and having a plurality of optical characteristic areas with different optical characteristics from each other; and switching unit for switching the optical characteristic areas such that one of the plurality of optical characteristic areas is arranged on the optical path by moving the optical glass member in a direction intersecting with the optical path, wherein the plurality of optical characteristic areas include an infrared cut filter area and a blank glass area, and the infrared cut filter area is formed by depositing an infrared cut material with infrared cut characteristics on a surface of the optical glass member.

With the configuration, images can be preferably captured by switching the two optical characteristic areas of the infrared cut filter area and the blank glass area according to an image capture state. For example, the infrared cut filter area is employed in the daytime to obtain an image of high quality by reducing the influence of infrared light. The blank glass area is employed in the nighttime to obtain an image with high sensitivity. Since the infrared cut filter area is formed by deposition in the present invention, the infrared cut filter area is extremely thin. Thus, the image pickup element does not need to be retracted to switch the optical characteristic areas. Therefore, a mechanism for retracting the image pickup element is not required. The camera device can be thereby reduced in cost and weight. The image pickup element and the optical filter member can be also arranged close to each other, so that dust attached to the optical filter member does not appear in an image.

In the camera device according to the present invention, one glass plate constitutes the optical glass member, a guide side is provided in the optical glass member so as to extend along a movement direction for switching the optical characteristic areas, and a guide portion for guiding the optical glass member in the movement direction in abutment against the guide side is provided in a case to which the optical glass member is mounted.

With the configuration, one glass plate can constitute the optical glass member. When the optical characteristic areas are switched, the guide side of the optical glass member is in abutment against the guide portion to appropriately guide the optical glass member in the movement direction. With the optical glass member described above (the optical glass member constituted by one glass plate), a thick filter frame as used in a conventional case is not required. The optical glass member can be thereby further reduced in thickness (reduced to a level that cannot be achieved when the conventional filter frame is used).

In the camera device according to the present invention, the switching unit includes a holder member mounted to the optical glass member, a link member having a long hole into which a pin provided on the holder member is inserted, and a driving source for rotating the link member, and the link member is rotated to cause the pin to slide in the long hole and thereby move the optical glass member in the movement direction when the optical characteristic areas are switched.

With the configuration, the pin is provided on the holder member of the optical glass member. The pin is inserted into the long hole of the link member. When the link member is rotated by the driving source, the pin slides in the long hole to move the optical glass member in the movement direction. The optical characteristic areas can be thereby switched.

In the camera device according to the present invention, a hole portion for mounting a pin is provided in the optical glass member, the switching unit includes the pin mounted to the hole portion of the optical glass member, a link member having a long hole into which the pin is inserted, and a driving source for rotating the link member, and the link member is rotated to cause the pin to slide in the long hole and thereby move the optical glass member in the movement direction when the optical characteristic areas are switched.

With the configuration, the hole portion is provided in the optical glass member. The pin is mounted to the hole portion. The pin is inserted into the long hole of the link member. When the link member is rotated by the driving source, the pin slides in the long hole to move the optical glass member in the movement direction. The optical characteristic areas can be thereby switched.

In the camera device according to the present invention, a long hole is provided in the optical glass member, the switching unit includes a link member having a pin to be inserted into the long hole of the optical glass member, and a driving source for rotating the link member, and the link member is rotated to cause the pin to slide in the long hole and thereby move the optical glass member in the movement direction when the optical characteristic areas are switched.

With the configuration, the long hole is provided in the optical glass member. The pin of the link member is inserted into the long hole. When the link member is rotated by the driving source, the pin slides in the long hole to move the optical glass member in the movement direction. The optical characteristic areas can be thereby switched.

In the camera device according to the present invention, a masking member for covering an area other than the infrared cut filter area is used in the deposition, and the switching unit switches the optical characteristic areas such that a border portion between the area covered by the masking member and the infrared cut filter area is not arranged on the optical path when the infrared cut filter area is arranged on the optical path.

With the configuration, the border portion between the area covered by the masking member (a masking area) and the infrared cut filter area is not arranged on the optical path. The deposited material does not have a uniform film thickness in the border portion and may thus ooze therefrom. A reduction in image quality due to the oozing can be thereby prevented.

In the camera device according to the present invention, the plurality of optical characteristic areas further include a neutral density filter area, and the neutral density filter area is formed by depositing a neutral density material with neutral density characteristics on a surface of the optical glass member.

With the configuration, images can be preferably captured by switching the optical characteristic areas to the neutral density filter area according to an image capture state. For example, when images are captured outdoors with high light intensity, the neutral density filter area is employed to obtain an image by reducing the intensity of light. Since the neutral density filter area is also formed by deposition in the present invention, the neutral density filter area is extremely thin. Thus, the image pickup element does not need to be retracted to switch the optical characteristic areas. Therefore, the mechanism for retracting the image pickup element is not required. The camera device can be thereby reduced in cost and weight.

In the camera device according to the present invention, the plurality of optical characteristic areas further include a white balance adjustment area, and the white balance adjustment area is formed by attaching a white material of reference white as a reference for white balance adjustment on a surface of the optical glass member.

With the configuration, the white balance adjustment can be performed by employing the white balance adjustment area. An image captured by using the white balance adjustment area is an image of reference white as the reference for the white balance adjustment. Thus, the white balance adjustment can be performed by use of the image.

A method according to the present invention is a method for manufacturing a camera device, the camera device including: an image pickup element; a birefringent plate fixed to a front surface of the image pickup element; an optical glass member arranged on an optical path of the image pickup element on a front side of the birefringent plate and having a plurality of optical characteristic areas with different optical characteristics from each other; and switching unit for switching the optical characteristic areas such that one of the plurality of optical characteristic areas is arranged on the optical path by moving the optical glass member in a direction intersecting with the optical path, wherein the plurality of optical characteristic areas include an infrared cut filter area and a blank glass area, the manufacturing method including: preparing the optical glass member; and depositing an infrared cut material with infrared cut characteristics on a surface of the optical glass member to form the infrared cut filter area.

With the manufacturing method, since the infrared cut filter area is formed by deposition, the infrared cut filter area is extremely thin. Thus, the image pickup element does not need to be retracted to switch the optical characteristic areas. Therefore, the mechanism for retracting the image pickup element is not required in the camera device. The camera device can be thereby reduced in manufacturing cost.

The present invention can provide the camera device having such an advantage that the mechanism for retracting the image pickup element to switch the optical filters is not required to thereby enable a reduction in cost and weight.

### BRIEF DESCRIPTION OF THE DRAWINGS

FIG. 1 is an explanatory view of the configuration of a main portion of a camera device according to a first embodiment of the present invention;
FIG. 2 is a perspective view of the camera device according to the first embodiment of the present invention;
FIG. 3 is an explanatory view of an optical filter member used in the camera device according to the first embodiment of the present invention;
FIG. 4 is an explanatory view of switching of optical filters (to an infrared cut filter area) according to the first embodiment of the present invention;
FIG. 5 is an explanatory view of switching of optical filters (to a blank glass area) according to the first embodiment of the present invention;
FIG. 6 is an explanatory view of the configuration of a main portion of a camera device according to a second embodiment of the present invention;
FIG. 7 is an explanatory view of switching of optical filters in the camera device according to the second embodiment of the present invention;
FIG. 8 is an explanatory view of the configuration of a camera device according to a third embodiment of the present invention;
FIG. 9 is an explanatory view (exploded perspective view) of a camera device according to a fourth embodiment of the present invention;
FIG. 10 is an explanatory view of switching of optical filters (to an infrared cut filter area) according to the fourth embodiment of the present invention;
FIG. 11 is an explanatory view of switching of optical filters (to a blank glass area) according to the fourth embodiment of the present invention;
FIG. 12 is an explanatory view of a camera device according to a modification (Modification 1) of the fourth embodiment of the present invention;
FIG. 13 is an explanatory view of a camera device according to another modification (Modification 2) of the fourth embodiment of the present invention;
FIG. 14 is a perspective view of an optical filter member used in a conventional camera device; and
FIG. 15 is an explanatory view of the optical filter member used in the conventional camera device.

### DETAILED DESCRIPTION OF THE PREFERRED EMBODIMENTS

In the following, a camera device according to embodiments of the present invention will be described based on the drawings. In the present embodiments, the camera device is used for a surveillance camera as an example. Although a case in which the camera device of the present invention is applied to a so-called box-type camera (a camera device with optional lens) will be described in the following embodiments, the camera device may be also applied to a so-called dome-type camera (a built-in camera device).

### (First Embodiment)

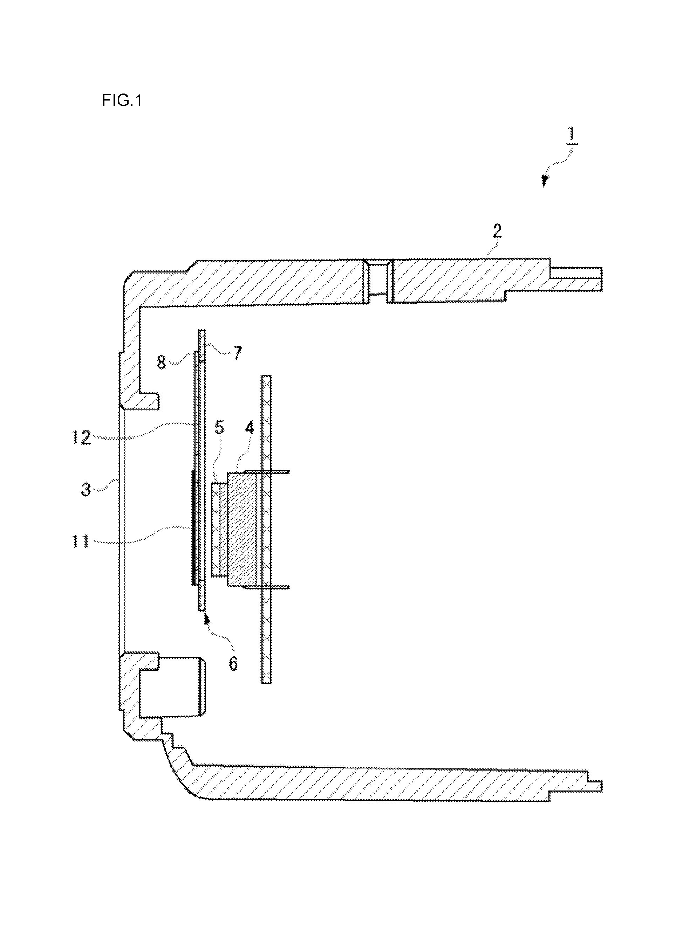

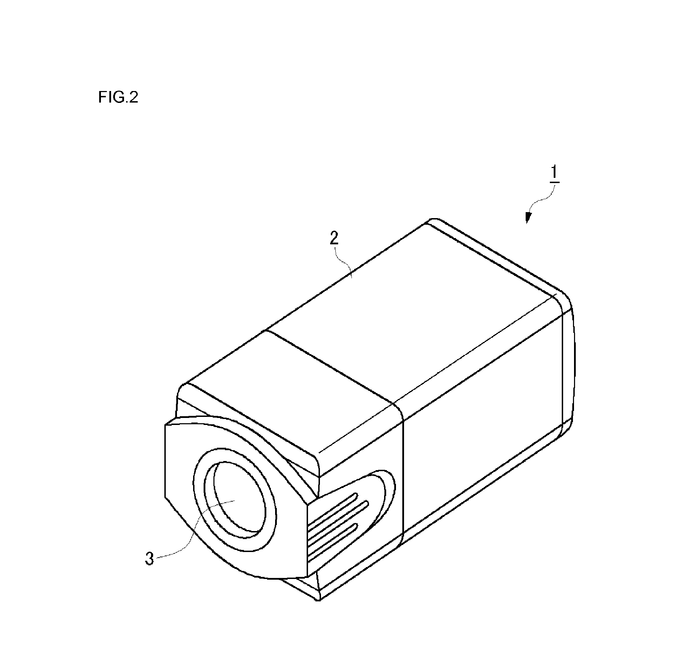

The configuration of a camera device according to a first embodiment of the present invention will be described by reference to the drawings. FIG. 1 is an explanatory view illustrating the configuration of a main portion of the camera device according to the present embodiment. FIG. 2 is a perspective view of the camera device according to the present embodiment.

As shown in FIG. 2, a camera device 1 includes a box-shaped housing 2. A lens window 3 is provided in the front surface of the housing 2. As shown in FIG. 1, an image pickup element 4 is arranged on the optical path of a lens inside the housing 2. The image pickup element 4 includes a CCD or a CMOS, for example. The lens optical path may be also considered as the optical path of the image pickup element 4.

A birefringent plate 5 is fixed to the front surface (an image pickup surface) of the image pickup element 4. The birefringent plate 5 is made of crystal, and functions as an optical low-pass filter. An optical filter member 6 is arranged on the lens optical path on the front side (the left side in FIG. 1) of the birefringent plate 5.

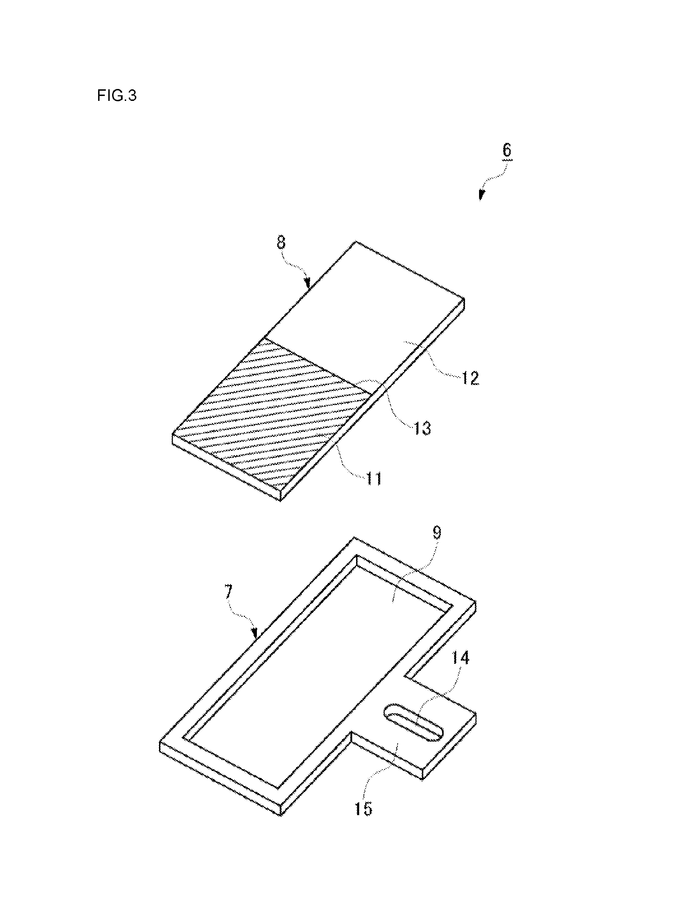

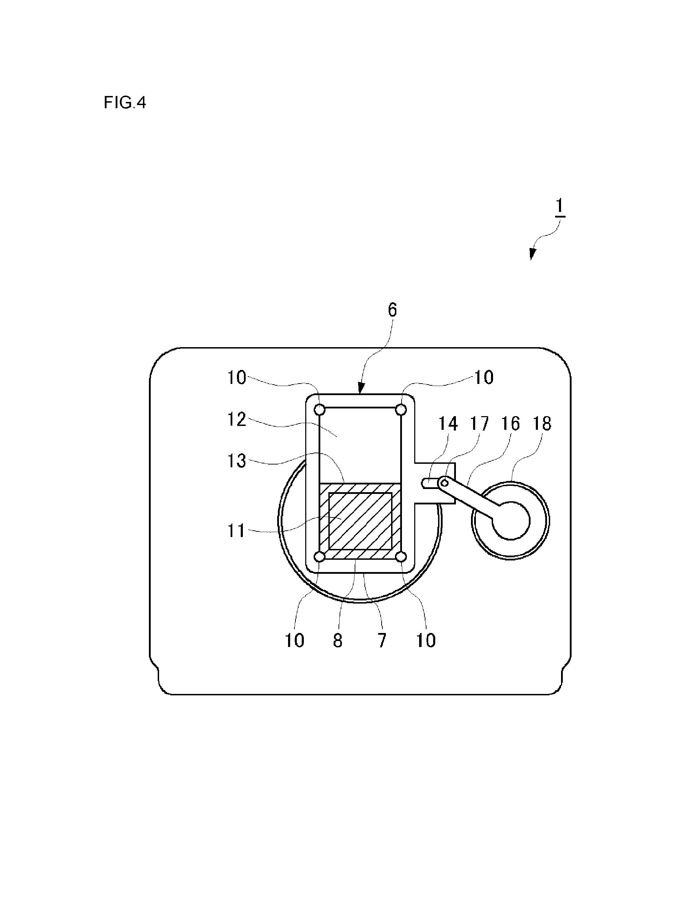

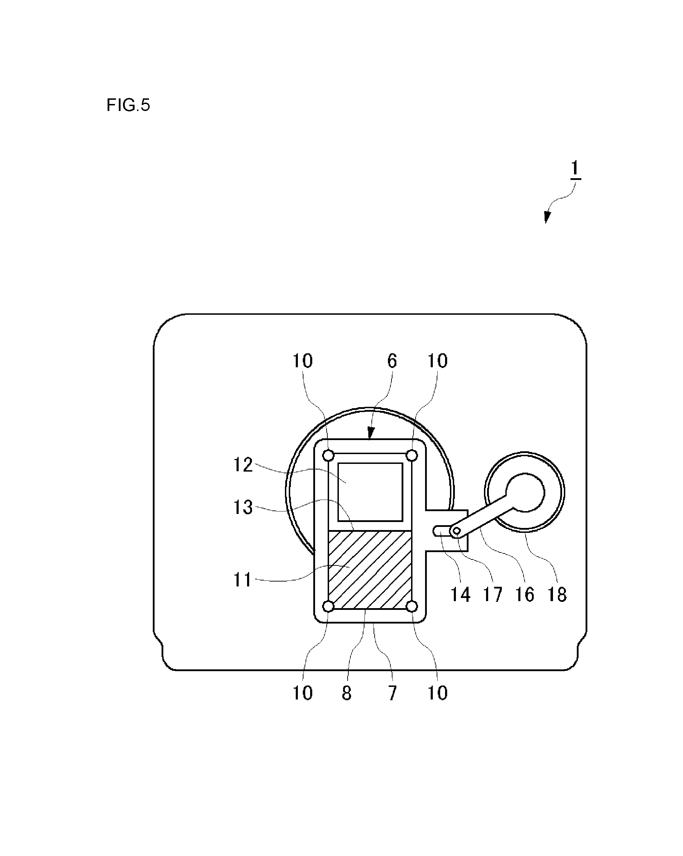

FIG. 3 is an explanatory view of the optical filter member 6. As shown in FIGS. 1 and 3, the optical filter member 6 includes a filter frame 7 and an optical glass member 8. The filter frame 7 has a substantially quadrangular outer shape. One opening 9 is provided in the filter frame 7. The opening 9 has a quadrangular shape. The optical glass member 8 also has a quadrangular shape. The optical glass member 8 is slightly larger than the opening 9 of the filter frame 7. Thus, the optical glass member 8 is not fitted into the opening 9 of the filter frame 7, but placed on the filter frame 7. The four corners of the optical glass member 8 are fixed to the filter frame 7 with an adhesive 10 (see FIGS. 4 and 5). The optical glass member 8 has two optical characteristic areas. The two optical characteristic areas have different optical characteristics from each other. In the present embodiment, the two optical characteristic areas are an infrared cut filter area 11 (an IR cut filter area) and a blank glass area 12.

The optical glass member 8 is made of optical glass. The infrared cut filter area 11 is formed by depositing a material with infrared cut characteristics (an infrared cut material) on the surface of the optical glass member 8. Examples of the infrared cut material include TiO₂, SiO₂, and Zn0₂. The infrared cut material is not deposited on the blank glass area 12.

A masking member (not shown) is used for depositing the infrared cut material on the optical glass member 8. The masking member is attached to the optical glass before deposition to cover an area (also referred to as masking area) other than the infrared cut filter area 11. In the deposition using the masking member, the infrared cut material may ooze from a border portion 13 (a border area) between the infrared cut filter area 11 and the masking area. Thus, as described below, optical filters are switched such that the border portion 13 where the oozing occurs (an oozing area) is not arranged on the lens optical path in the present embodiment.

Next, a switching mechanism for the optical characteristic areas (the infrared cut filter area 11 and the blank glass area 12) will be described by reference to FIGS. 4 and 5. FIG. 4 is an explanatory view of switching to the infrared cut filter area 11. FIG. 5 is an explanatory view of switching to the blank glass area 12.

As shown in FIGS. 4 and 5, a projecting portion 15 having a long hole 14 is provided on the filter frame 7 (see FIG. 3). A pin 17 of a link member 16 is slidably inserted into the long hole 14 of the projecting portion 15. The link member 16 is rotatable by a driving force of a motor 18. The driving force of the motor 18 is transmitted to the filter frame via the link member 16. Accordingly, the filter frame can slide in a vertical direction (a direction intersecting with the optical axis) by the driving force of the motor 18.

When the link member 16 is rotated, the pin 17 slides in the long hole 14 of the filter frame 7 to move the filter frame 7 in the vertical direction (the direction intersecting with the optical axis). The rotational movement of the link member 16 is thereby converted into the vertical movement of the filter frame. The filter frame, the link member 16 and the motor 18 correspond to the switching unit of the present invention.

The camera device 1 of the present embodiment has two switching positions. The link member 16 is rotated in a clockwise (right hand) direction at a first switching position. The optical filter member 6 is thereby moved upward to arrange the infrared cut filter area 11 on the optical path (see FIG. 4). The link member 16 is rotated in a counter-clockwise (left hand) direction at a second switching position. The optical filter member 6 is thereby moved downward to arrange the blank glass area 12 on the optical path (see FIG. 5). As described above, one of the optical characteristic areas (the infrared cut filter area 11 and the blank glass area 12) is arranged on the optical path. In this case, the border portion 13 between the infrared cut filter area 11 and the masking area is not arranged on the optical path at both the two switching positions.

With the camera device 1 according to the first embodiment of the present invention, a mechanism for retracting the image pickup element 4 to switch the optical filters is not required. The camera device 1 can be thereby reduced in cost and weight.

The camera device 1 of the present embodiment can preferably capture images by switching the two optical characteristic areas of the infrared cut filter area 11 and the blank glass area 12 according to an image capture state. For example, the infrared cut filter area 11 is employed in the daytime to obtain an image of high quality by reducing the influence of infrared light. The blank glass area 12 is employed in the nighttime to obtain an image with high sensitivity. Since the infrared cut filter area 11 is formed by deposition in the present embodiment, the infrared cut filter area 11 is extremely thin. Thus, the image pickup element 4 does not need to be retracted to switch the optical characteristic areas. Therefore, the mechanism for retracting the image pickup element 4 is not required. The camera device 1 can be thereby reduced in cost and weight. The image pickup element 4 and the optical filter member 6 can be also arranged close to each other, so that dust attached to the optical filter member 6 does not appear in an image.

In the present embodiment, the border portion 13 between the area covered by the masking member (the masking area) and the infrared cut filter area 11 is not arranged on the optical path. The deposited material does not have a uniform film thickness in the border portion 13 and may thus ooze therefrom. A reduction in image quality due to the oozing can be thereby prevented.

### (Second Embodiment)

Next, the camera device 1 according to a second embodiment of the present invention will be described. Here, a difference between the camera device 1 of the second embodiment and that of the first embodiment will be mainly described. Unless otherwise noted, the configuration and the operation of the present embodiment are the same as those of the first embodiment.

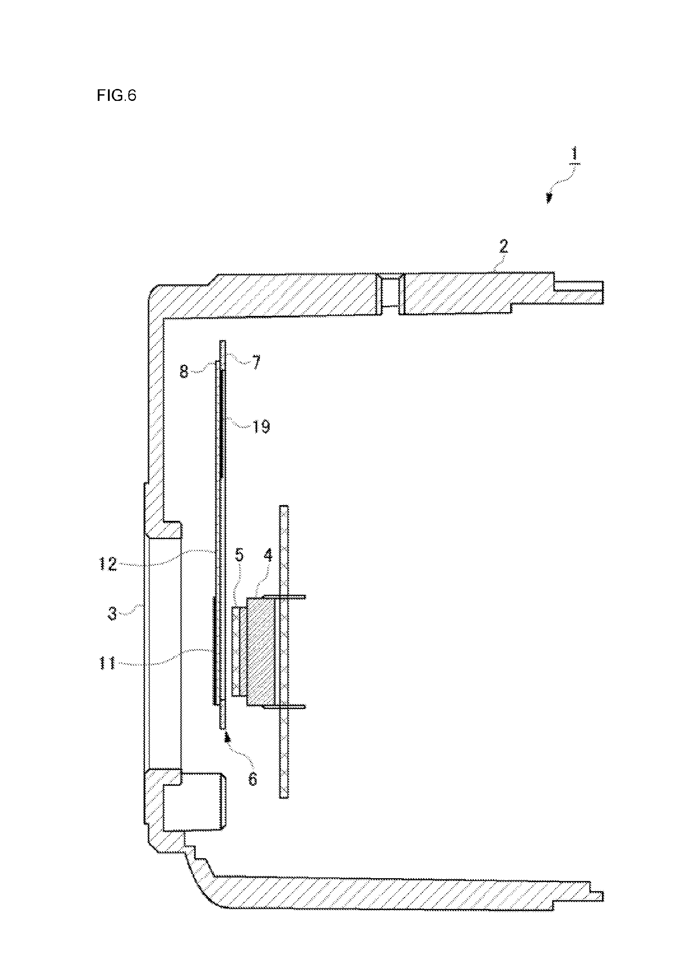

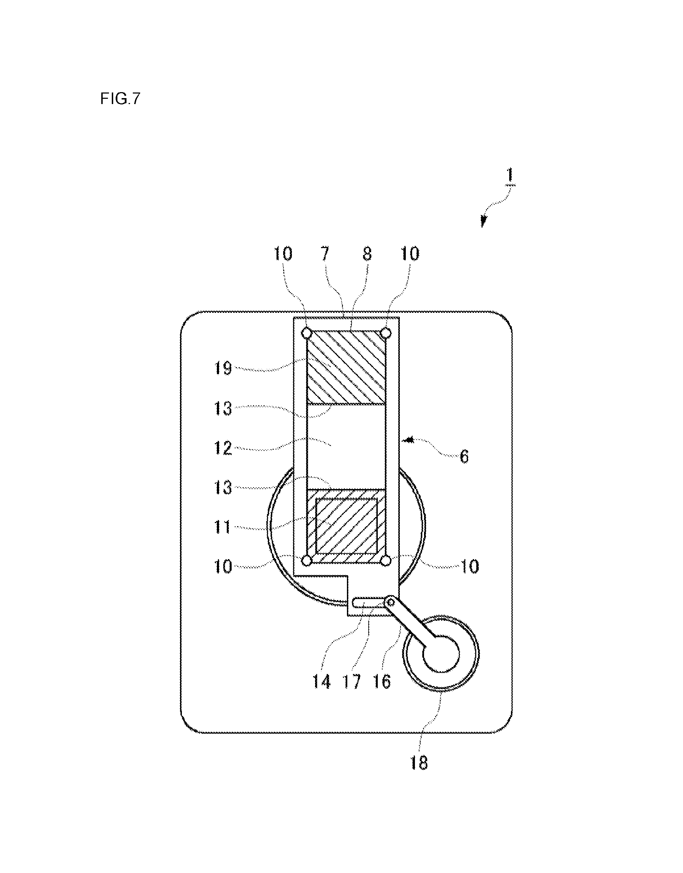

FIG. 6 is an explanatory view illustrating the configuration of a main portion of the camera device 1 according to the present embodiment. FIG. 7 is an explanatory view of switching of optical filters according to the present embodiment. As shown in FIGS. 6 and 7, the optical glass member 8 has three optical characteristic areas in the present embodiment. The three optical characteristic areas are the infrared cut filter area 11, the blank glass area 12, and a neutral density filter area 19 (an ND filter area).

The neutral density filter area 19 is formed by depositing a material with neutral density characteristics (a neutral density material) on the surface of the optical glass member 8. Examples of the neutral density material include Al. Since the infrared cut filter area 11 and the blank glass area 12 are the same as those of the first embodiment, the description thereof is omitted.

The masking member is also used for depositing the neutral density material on the optical glass member 8. The neutral density material is preferably deposited on the surface on the opposite side to the surface on which the infrared cut material is deposited. In FIG. 6, the infrared cut material is deposited on the front surface (the left side surface in FIG. 6) of the optical glass member 8, and the neutral density material is deposited on the rear surface (the right side surface in FIG. 6) of the optical glass member 8.

The masking member is used for depositing the infrared cut material and the neutral density material. When one material (for example, the neutral density material) is deposited after depositing the other material (for example, the infrared cut material), the masking member is attached onto the already-deposited material (the infrared cut material) if the neutral density material is deposited on the same surface as the surface on which the infrared cut material is deposited. Thus, when the masking member is stripped after depositing the one material (the neutral density material), the deposited material (the infrared cut material) may be stripped together. Such problem does not occur when the neutral density material is deposited on the surface on the opposite side to the surface on which the infrared cut material is deposited.

The camera device 1 according to the second embodiment of the present invention also produces the same effects as those of the first embodiment.

Moreover, the camera device 1 of the present embodiment can preferably capture images by switching the optical characteristic areas to the neutral density filter area 19 according to an image capture state. For example, when images are captured outdoors with high light intensity, the neutral density filter area 19 is employed to obtain an image by reducing the intensity of light. Since the neutral density filter area 19 is also formed by deposition, the neutral density filter area 19 is extremely thin. Thus, the image pickup element 4 does not need to be retracted to switch the optical characteristic areas. Therefore, the mechanism for retracting the image pickup element 4 is not required. The camera device 1 can be thereby reduced in cost and weight.

### (Third Embodiment)

Next, the camera device 1 according to a third embodiment of the present invention will be described. Here, a difference between the camera device 1 of the third embodiment and that of the first embodiment will be mainly described. Unless otherwise noted, the configuration and the operation of the present embodiment are the same as those of the first embodiment.

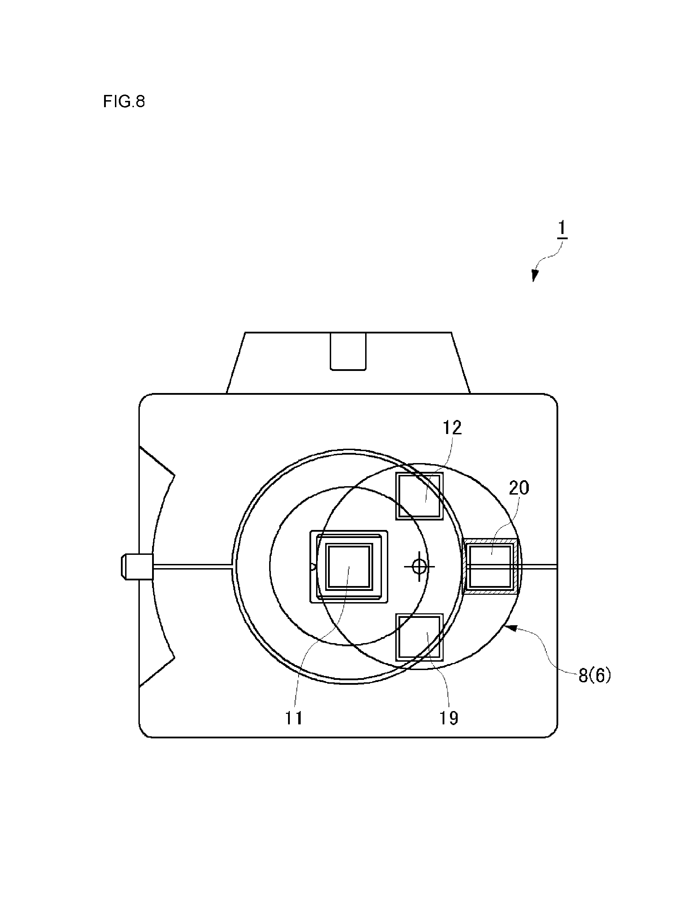

FIG. 8 is an explanatory view illustrating the configuration of the camera device 1 according to the present embodiment. As shown in FIG. 8, the optical filter member 6 of the present embodiment includes the circular optical glass member 8. The optical glass member 8 has four optical characteristic areas. The four optical characteristic areas are the infrared cut filter area 11, the blank glass area 12, the neutral density filter area 19, and a white balance adjustment area 20.

The white balance adjustment area 20 is formed by attaching a material of reference white (a white material) as a reference for white balance adjustment on the surface of the optical glass member 8. The white material is a sheet-like member or a film-like member, for example, and may be also referred to as white member. Since the infrared cut filter area 11 and the blank glass area 12 are the same as those of the first embodiment and the neutral density filter area 19 is the same as that of the second embodiment, the description of the optical characteristic areas is omitted.

In the present embodiment, the optical filter member 6 (the circular optical glass member 8) is rotated by a driving force of a motor (not shown). The optical filter member 6 is rotated by the driving force of the motor to switch four rotational positions (rotational positions where the four optical characteristic areas are respectively arranged on the optical path) (see FIG. 8).

The camera device 1 according to the third embodiment of the present invention also produces the same effects as those of the first embodiment.

Moreover, in the camera device 1 of the present embodiment, the white balance adjustment can be performed by switching the optical characteristic areas to the white balance adjustment area 20. An image captured by using the white balance adjustment area 20 is an image of reference white as the reference for the white balance adjustment. Thus, the white balance adjustment can be performed by use of the image. Since the white balance adjustment area 20 is formed by attaching the white material, the image pickup element 4 needs to be slightly retracted to switch the optical characteristic areas.

### (Fourth Embodiment)

Next, the camera device 1 according to a fourth embodiment of the present invention will be described. Here, a difference between the camera device 1 of the fourth embodiment and that of the first embodiment will be mainly described. Unless otherwise noted, the configuration and the operation of the present embodiment are the same as those of the first embodiment.

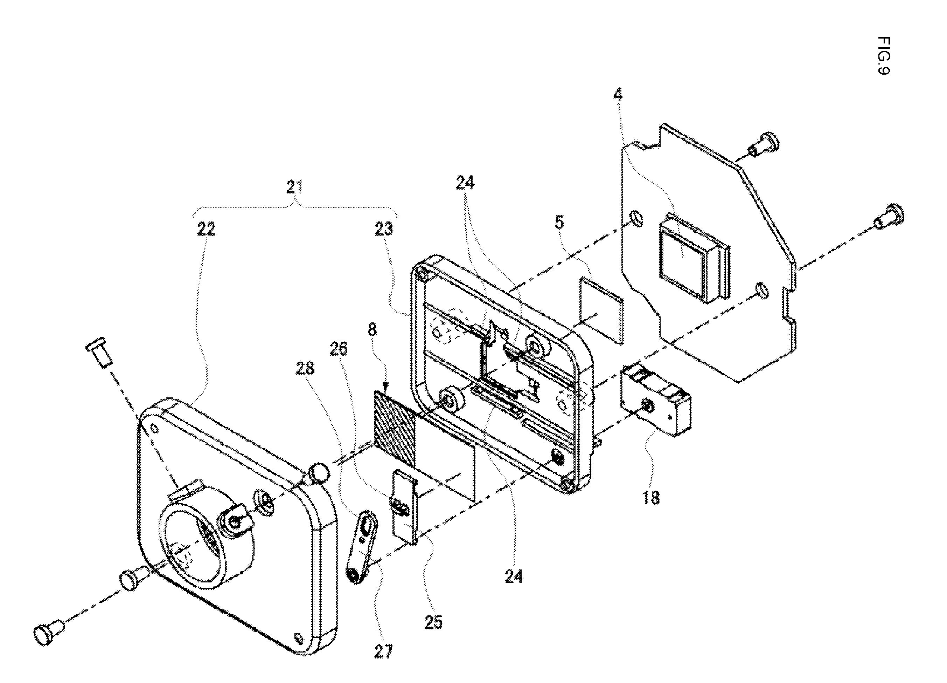

FIG. 9 is an exploded perspective view for explaining the configuration of the camera device 1 according to the present embodiment. As shown in FIG. 9, one glass plate constitutes the optical glass member 8 of the present embodiment. The optical glass member 8 is housed in a case 21. The case 21 includes a front case 22 and a rear case 23. The optical glass member 8 is mounted to the rear case 23.

As shown in FIG. 9, the optical glass member 8 has a substantially quadrangular shape (a substantially rectangular shape). The optical glass member 8 is moved to slide in a direction along the long sides to switch the optical characteristic areas. The long sides of the optical glass member 8 extend along a movement direction for switching the optical characteristic areas. Guide portions 24 in abutment against the long sides of the optical glass member 8 are provided on the rear case 23.

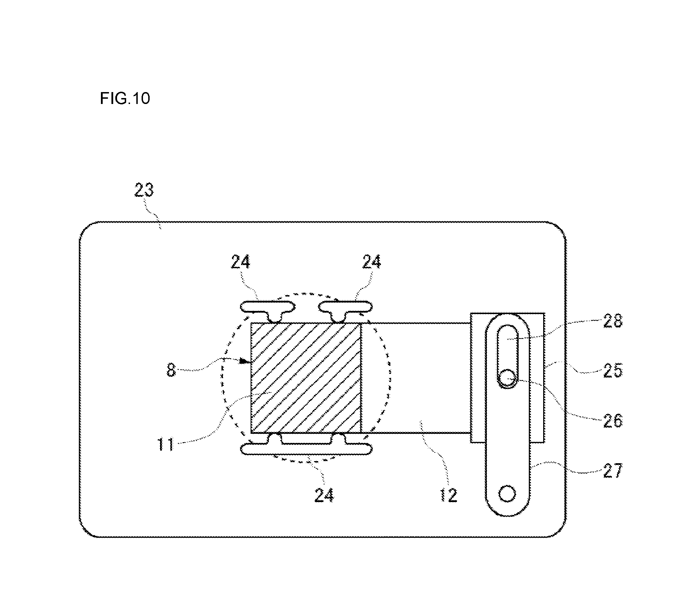

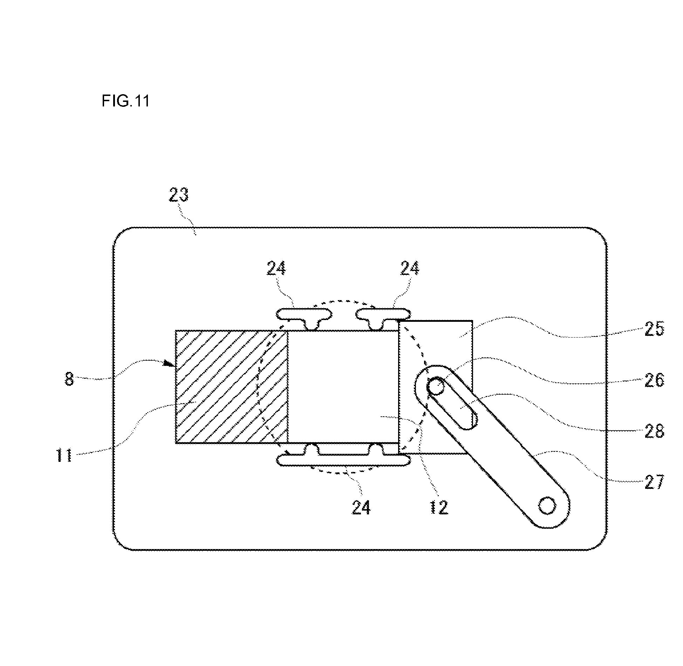

In this case, a convex portion of each of two guide portions 24 is in abutment against one of the two long sides (the upper side in FIGS. 10 and 11) of the optical glass member 8, and convex portions (two convex portions) of one guide portion 24 are in abutment against the other long side (the lower side in FIGS. 10 and 11) thereof. The guide portions 24 are respectively in abutment against the long sides of the optical glass member 8 from outside as described above (the optical glass member 8 is sandwiched between the guide portions 24), so that the optical glass member 8 is guided so as to slide in the movement direction (a direction intersecting with the optical axis) for switching the optical characteristic areas. Thus, the long sides of the optical glass member 8 may be also referred to as guide sides.

As shown in FIG. 9, a holder member 25 is mounted to an end portion of the optical glass member 8. A pin 26 is erected from a center portion of the holder member 25. The pin 26 is slidably inserted into a long hole 28 of a link member 27. The link member 27 is rotatable by the driving force of the motor 18. The driving force of the motor 18 is transmitted to the optical glass member 8 via the link member 27. The optical glass member 8 can thereby slide in the direction intersecting with the optical axis (a right-left direction in FIGS. 10 and 11) by the driving force of the motor 18. Here, the motor 18 corresponds to the driving source of the present invention.

Next, the switching of the optical characteristic areas (the infrared cut filter area 11 and the blank glass area 12) will be described by reference to FIGS. 10 and 11. In this case, when the link member 27 is rotated, the pin 26 slides in the long hole 28 of the link member 27, so that the optical glass member 8 slides in the right-left direction (the direction intersecting with the optical axis). The rotational movement of the link member 27 is thereby converted into the movement of the optical glass member 8 in the right-left direction.

The camera device 1 of the present embodiment also has two switching positions in a similar manner to the first embodiment. The link member 27 is rotated in the clockwise (right hand) direction at a first switching position. The optical glass member 8 is thereby moved to the right to arrange the infrared cut filter area 11 on the optical path (see FIG. 10). The link member 27 is rotated in the counterclockwise (left hand) direction at a second switching position. The optical glass member 8 is thereby moved to the left to arrange the blank glass area 12 on the optical path (see FIG. 11). Accordingly, one of the optical characteristic areas (the infrared cut filter area 11 and the blank glass area 12) is arranged on the optical path. In this case, the guide portions 24 are in abutment against the long sides of the optical glass member 8 (the guide portions 24 are not separated from the optical glass member 8) at both the two switching positions.

The camera device 1 according to the fourth embodiment of the present invention also produces the same effects as those of the first embodiment.

Moreover, in the camera device 1 of the present embodiment, one glass plate can constitute the optical glass member 8. When the optical characteristic areas are switched, the guide sides of the optical glass member 8 are in abutment against the guide portions 24 to appropriately guide the optical glass member 8 in the movement direction. With the optical glass member 8 (the optical glass member 8 constituted by one glass plate), a thick filter frame as used in a conventional case is not required. The optical glass member 8 can be thereby further reduced in thickness (reduced to a level that cannot be achieved when the conventional filter frame is used) .

In this case, the pin 26 is provided on the holder member 25 of the optical glass member 8. The pin 26 is inserted into the long hole 28 of the link member 27. When the link member 27 is rotated by the motor 18, the pin 26 slides in the long hole 28 to move the optical glass member 8 in the movement direction. The optical characteristic areas can be thereby switched.

### (Modification)

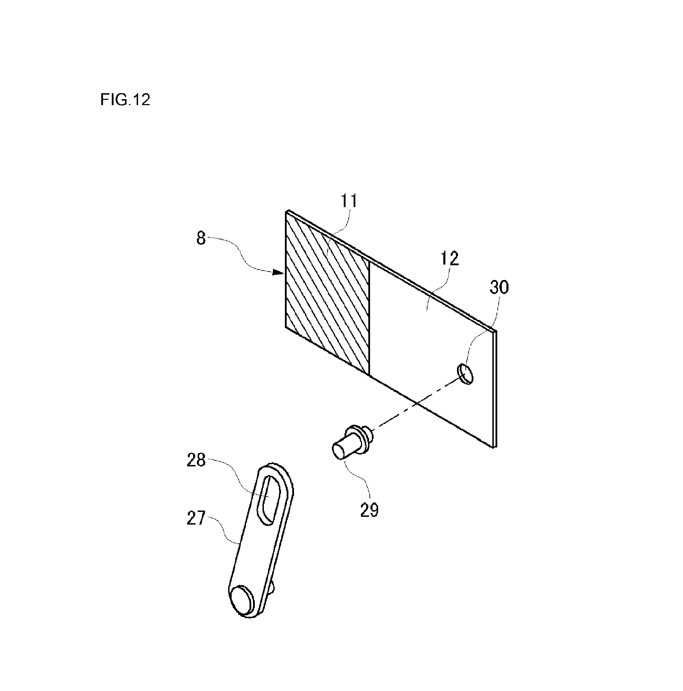

Next, modifications of the fourth embodiment will be described. FIG. 12 is an explanatory view illustrating the configuration of a modification (Modification 1) of the fourth embodiment. As shown in FIG. 12, a hole portion 30 for mounting a pin 29 is provided in the end portion of the optical glass member 8 in the Modification 1. The long hole 28 into which the pin 29 is inserted is provided in the link member 27. The pin 29 is mounted to the hole portion 30 of the optical glass member 8. The pin 29 is slidably inserted into the long hole 28 of the link member 27.

In the Modification 1, the link member 27 is also rotated by the rotational driving force of the motor 18 when the optical characteristic areas (the infrared cut filter area 11 and the blank glass area 12) are switched. In this case, in a similar manner to the fourth embodiment, when the link member 27 is rotated, the pin 29 slides in the long hole 28 of the link member 27, so that the optical glass member 8 slides in the right-left direction (the direction intersecting with the optical axis) (see FIGS. 10 and 11). The optical characteristic areas can be also thereby switched in the Modification 1.

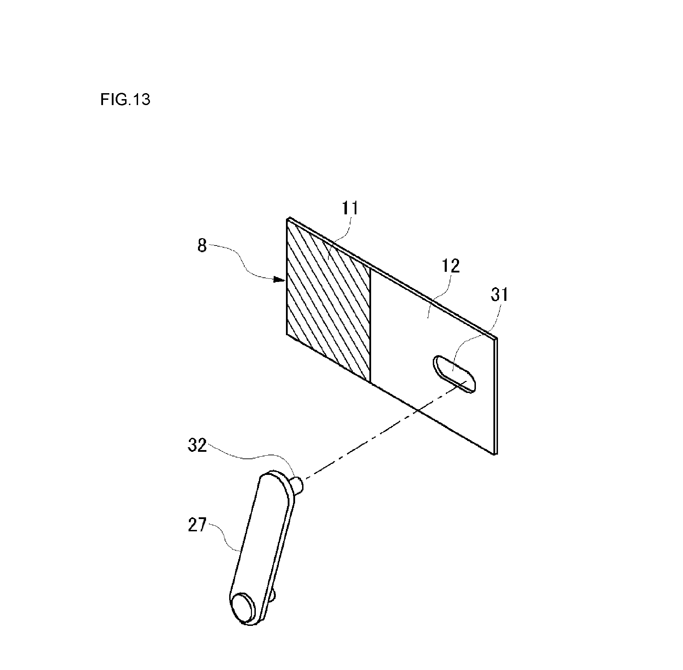

FIG. 13 is an explanatory view illustrating the configuration of another modification (Modification 2) of the fourth embodiment. As shown in FIG. 13, a long hole 31 is provided in the end portion of the optical glass member 8 in the Modification 2. A pin 32 to be inserted into the long hole 31 is provided on the link member 27. The pin 32 of the link member 27 is slidably inserted into the long hole 31 of the optical glass member 8.

In the Modification 2, the link member 27 is also rotated by the rotational driving force of the motor 18 when the optical characteristic areas (the infrared cut filter area 11 and the blank glass area 12) are switched. In this case, when the link member 27 is rotated, the pin 32 slides in the long hole 31 of the optical glass member 8, so that the optical glass member 8 slides in the right-left direction (the direction intersecting with the optical axis) (see FIGS. 10 and 11). The optical characteristic areas can be also thereby switched in the Modification 2.

Although the embodiments of the present invention have been described above as examples, the scope of the present invention is not limited thereto, and the present invention may be altered or modified according to the purpose within the scope as defined in the claims.

As described above, the camera device according to the present invention has such an advantage that the mechanism for retracting the image pickup element to switch the optical filters is not required to thereby enable a reduction in cost and weight. The camera device is thus effectively used as a surveillance camera or the like.

## Claims

1. A camera device comprising:
an image pickup element;
a birefringent plate fixed to a front surface of the image pickup element;
an optical glass member arranged on an optical path of the image pickup element on a front side of the birefringent plate and having a plurality of optical characteristic areas with different optical characteristics from each other; and
switching unit for switching the optical characteristic areas such that one of the plurality of optical characteristic areas is arranged on the optical path by moving the optical glass member in a direction intersecting with the optical path,
wherein the plurality of optical characteristic areas include an infrared cut filter area and a blank glass area, and the infrared cut filter area is formed by depositing an infrared cut material with infrared cut characteristics on a surface of the optical glass member.

2. The camera device according to claim 1,
wherein one glass plate constitutes the optical glass member,
a guide side is provided in the optical glass member so as to extend along a movement direction for switching the optical characteristic areas, and
a guide portion for guiding the optical glass member in the movement direction in abutment against the guide side is provided in a case to which the optical glass member is mounted.

3. The camera device according to claim 2,
wherein the switching unit comprises a holder member mounted to the optical glass member, a link member having a long hole into which a pin provided on the holder member is inserted, and a driving source for rotating the link member, and
the link member is rotated to cause the pin to slide in the long hole and thereby move the optical glass member in the movement direction when the optical characteristic areas are switched.

4. The camera device according to claim 2,
wherein a hole portion for mounting a pin is provided in the optical glass member,
the switching unit comprises the pin mounted to the hole portion of the optical glass member, a link member having a long hole into which the pin is inserted, and a driving source for rotating the link member, and
the link member is rotated to cause the pin to slide in the long hole and thereby move the optical glass member in the movement direction when the optical characteristic areas are switched.

5. The camera device according to claim 2,
wherein a long hole is provided in the optical glass member,
the switching unit comprises a link member having a pin to be inserted into the long hole of the optical glass member, and a driving source for rotating the link member, and
the link member is rotated to cause the pin to slide in the long hole and thereby move the optical glass member in the movement direction when the optical characteristic areas are switched.

6. The camera device according to claim 1,
wherein a masking member for covering an area other than the infrared cut filter area is used in the deposition, and
the switching unit switches the optical characteristic areas such that a border portion between the area covered by the masking member and the infrared cut filter area is not arranged on the optical path when the infrared cut filter area is arranged on the optical path.

7. The camera device according to claim 1,
wherein the plurality of optical characteristic areas further include a neutral density filter area, and the neutral density filter area is formed by depositing a neutral density material with neutral density characteristics on a surface of the optical glass member.

8. The camera device according claim 1,
wherein the plurality of optical characteristic areas further include a white balance adjustment area, and the white balance adjustment area is formed by attaching a white material of reference white as a reference for white balance adjustment on a surface of the optical glass member.

9. A method for manufacturing a camera device,
the camera device comprising:
an image pickup element; a birefringent plate fixed to a front surface of the image pickup element; an optical glass member arranged on an optical path of the image pickup element on a front side of the birefringent plate and having a plurality of optical characteristic areas with different optical characteristics from each other; and switching unit for switching the optical characteristic areas such that one of the plurality of optical characteristic areas is arranged on the optical path by moving the optical glass member in a direction intersecting with the optical path,
wherein the plurality of optical characteristic areas include an infrared cut filter area and a blank glass area,
the manufacturing method comprising:
preparing the optical glass member; and depositing an infrared cut material with infrared cut characteristics on a surface of the optical glass member to form the infrared cut filter area.
